# EUROPEAN PATENT SPECIFICATION

(11) **EP 3 737 715 B1**
(45) Date of publication and mention of the grant of the patent: **19.07.2023**
(21) Application number: 19914180.5
(22) Date of filing: 07.03.2019
(51) Int. Cl.: C09J 133/04, B27N 1/00, B27N 3/00, B27N 3/02, B27N 3/04, B27N 3/08, B32B 7/12, B32B 21/13, B32B 21/14, B27D 1/04

(54) **FORMALDEHYDE FREE ADHESIVE COMPOSITION**
FORMALDEHYDFREIE KLEBSTOFFZUSAMMENSETZUNG
COMPOSITION ADHÉSIVE EXEMPTE DE FORMALDÉHYDE

(43) Date of publication of application: 18.11.2020
(73) Proprietor: DOW GLOBAL TECHNOLOGIES LLC, Midland, MI 48674 (US); Dow Silicones Corporation, Midland, MI 48686-0994 (US)
(72) Inventor: HU, Minbiao, Shanghai 201203 (CN); SUN, Tong, Shanghai 201203 (CN); JIANG, Jingui, Shanghai 201203 (CN); PAN, Shi, Shanghai 201203 (CN); FENG, Shaoguang, Shanghai 201203 (CN); ZHAI, Xuemei, Shanghai 201203 (CN)
(74) Representative: Jewell, Catherine Mary
(86) International application number: PCT/CN2019/077265
(87) International publication number: WO 2020/177110

(56) References cited:
- CN-A- 102 653 623
- CN-A- 109 071 907
- CN-A- 109 251 682
- JP-A- 2005 344 084
- JP-A- 2009 203 368
- US-A- 5 037 700
- US-A- 5 037 700
- US-A- 5 480 720
- US-A- 5 480 720

## Description

### FIELD OF THE INVENTION

The present disclosure relates to an aqueous adhesive composition, in particular a formaldehyde free adhesive composition for plywood.

### INTRODUCTION

Plywood is a sheet material manufactured from thin layers or "plies" of wood veneer that are glued together with adjacent layers. It is an engineered wood from the family of wood-based panel which includes fiberboard and particle board (chipboard).

Adhesive is used to glue wood layers together to manufacture plywood. The majority of adhesives used are formaldehyde-based curing formulations, such as urea formaldehyde (UF) resin, melamine formaldehyde (MF) resin and phenol formaldehyde (PF) resin. Although several formaldehyde free curing formulations (such as emulsion polymer-isocyanate adhesive (EPI)) exist, they suffer from significant drawbacks such as:
- Short work window. Higher reactivity and fast curing speed result in short work window, i.e., a worker has to use an adhesive as fast as possible, after opening a package of the adhesive. In certain cases, it would require additional investment on new equipment and working process redesign to accommodate such short work window.
- High cost. Diphenylmethane diisocyanate (MDI) or hexamethylene diisocyanate (HDI)-based polyisocyanate raw materials are more expensive than PF/ME/UF-based adhesive packages.

Formaldehyde-free adhesive compositions used in the production of plywood and based on acrylic polymer emulsions are known from JP2009-203368.

Recently some biomaterial-based adhesive systems such as flour-based or soybean-based adhesives were reported to be used for plywood, but they all show poor performance in workability and water-resistance.

Governmental regulations are pushing towards even lower allowable formaldehyde emission levels for the wood based panel industry (E0 <=0.5mg/L vs. E1 <=1.5mg/L, in which E0 and E1 both refer to the formaldehyde emission standard in China, GB/T 18102-2007), and the public is becoming more and more aware of health hazards posed by formaldehyde such as irritation, allergy and even cancer and malformation. Currently in US, there is a certification for no-added formaldehyde (NAF) product manufacturers by the California Air Resources Board (CARB). In China, an industry association standard of biomaterial-based composite panels and final products of no-added formaldehyde has been recently launched. Therefore, there is a strong need in the wood-based panel industry for alternative formaldehyde free adhesive compositions for plywood that have desirable performances such as water resistance and good workability.

### SUMMARY OF THE INVENTION

The present disclosure provides a novel formaldehyde free adhesive composition for plywood that has desirable performances, such as water resistance and good workability.

In a first aspect, the present disclosure provides a formaldehyde free adhesive composition comprising:
(a) an aqueous emulsion of acrylic polymer;
(b) one or more epoxy compound dispersions or acrylic-epoxy hybrid dispersions;
(c) at least one water soluble, water emulsifiable or water dispersible epoxy curing agent selected from the group consisting of polyamines, polyamides, amidoamines, carboxylic functional polyesters, carboxylic functional polyacrylates, anhydrides, mercaptans, polymercaptans, cyclic amidines, and combinations thereof; and
(d) an aqueous continuous phase;
wherein said acrylic polymer has at least one structural unit of one or more ethylenically unsaturated monomers carrying at least one adhesion prompting function group, and said acrylic polymer has a glass transition temperature of -40 °C to 15°C, as determined by differential scanning calorimetry, and wherein the adhesion prompting function group is selected from the group consisting of ureido, alkoxysilane and phosphorous groups.

In a second aspect, the present disclosure provides a method for producing plywood, comprising:
(a) providing a formaldehyde free adhesive composition according to this disclosure;
(b) providing two or more layers of wood;
(c) applying the formaldehyde free adhesive composition onto one or two surfaces of said two or more layers of wood;
(d) stacking two or more layers of wood and pressing the stacked two or more layers of wood at room temperature; and
(e) pressing the stacked two or more layers of wood at an elevated temperature of 50-200 °C.

In a third aspect, the present disclosure provides a plywood obtained by a formaldehyde free adhesive composition according to the present disclosure.

### DETAILED DESCRIPTION OF THE INVENTION

As disclosed herein, the term "composition", "formulation" or "mixture" refers to a physical blend of different components, which is obtained by mixing simply different components by a physical means.

As disclosed herein, the term "formaldehyde free" means that the composition has no added formaldehyde and/or no added formaldehyde generators.

As disclosed herein, the term "glass transition temperature" or "Tg" is determined by differential scanning calorimetry (DSC).

As disclosed herein, the term "alkyl" or "alkoxy" refers to an alkyl or alkoxy having 1 to 20 carbon atoms, preferably 1-10 carbon atoms, more preferably, 1-6 carbon atoms.

The present disclosure provides a novel formaldehyde free adhesive composition for plywood, while retaining desirable performances, such as water resistance and good workability. The adhesive composition may be used to produce cost-effectively plywood, without impacting current manufacture process. The formaldehyde free adhesive composition according to the present disclosure is also free of polyisobutylene compounds, vinyl acetate-based polymers and polymers comprising 80 weight-percent or more ethylenically unsaturated acid co-monomers.

The present disclosure provides a formaldehyde free adhesive composition comprising:
(a) an aqueous emulsion of acrylic polymer;
(b) one or more epoxy compound dispersions or acrylic-epoxy hybrid dispersions;
(c) at least one water soluble, water emulsifiable or water dispersible epoxy curing agent selected from the group consisting of polyamines, polyamides, amidoamines, carboxylic functional polyesters, carboxylic functional polyacrylates, anhydrides, mercaptans, polymercaptans, cyclic amidines, and combinations thereof; and
(d) an aqueous continuous phase;
wherein said acrylic polymer has at least one structural unit of one or more ethylenically unsaturated monomers carrying at least one adhesion prompting function group, and said acrylic polymer has a glass transition temperature of -40°C to 15°C, as determined by differential scanning calorimetry, and wherein the adhesion prompting function group is selected from the group consisting of ureido, alkoxysilane and phosphorous groups.

The aqueous emulsion of acrylic polymer can be prepared through free radical emulsion or suspension addition polymerization or by dispersion of a pre-formed polymer under shear into an aqueous medium. Monomers suitable for the preparation of the acrylic polymer include, but are not limited to, (meth)acrylic acid and (meth)acrylates, such as alkyl (meth)acrylates. Examples of alkyl (meth)acrylates are, but not limited to, methyl acrylate, ethyl acrylate, butyl acrylate, glycidyl methacrylate, 2-ethylhexyl acrylate, methyl methacrylate, ethyl methacrylate, butyl methacrylate, and 2-ethylhexyl methacrylate, and combinations thereof.

The acrylic polymer may further comprise structural units of one or more styrene monomers. The styrene monomers may include, for example, styrene, substituted styrene, or mixtures thereof. The substituted styrene may include, for example, benzyl acrylate, 2-phenoxyethyl acrylate, butylstryene, methylstyrene, p-methoxystyrene, or mixtures thereof. Preferred styrene monomer is styrene. The polymer may comprise, by weight of the polymer, 5% or more, 10% or more, 15% or more, 17% or more, 19% or more, or even 21% or more, and at the same time, 40% or less, 35% or less, 30% or less, 28% or less, or even 26% or less, of structural unit(s) of the styrene monomer(s).

The acrylic polymer in the present disclosure comprises structural units of one or more ethylenically unsaturated monomers carrying at least one adhesion prompting function group. The adhesion prompting function group is selected from the group consisting of ureido, alkoxysilane (preferably hydrolyzable alkoxysilane), or phosphorous groups. Suitable ureido functional monomer includes, for example, ureido group containing (meth)acrylic acid alkyl esters. Examples of suitable ureido monomers are illustrated below: 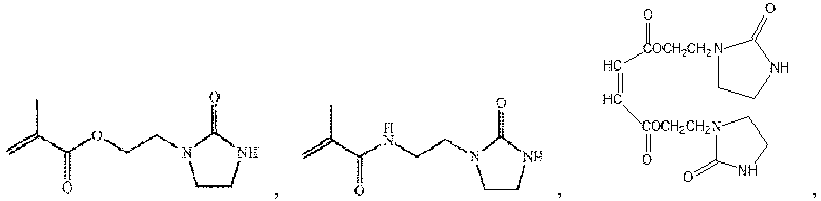 or mixtures thereof. Suitable alkoxysilane functional monomer includes, for example, vinyltrialkoxysilanes such as vinyltrimethoxysilane; alkylvinyldialkoxysilanes; (meth)acryloxyalkyltrialkoxysilanes such as (meth)acryloxyethyltrimethoxysilane and (meth)acryloxypropyltrimethoxysilane; derivatives thereof, and combinations thereof. Suitable phosphorous functional monomer includes, for example, phosphorous-containing (meth)acrylates, such as phosphoethyl (meth)acrylate, phosphopropyl (meth)acrylate, phosphobutyl (meth)acrylate, salts thereof, and mixtures thereof; CH₂=C(R)-C(O)-O-(R₁O)ₙ-P(O)(OH)₂, wherein R=H or CH₃, R₁=alkyl, and n=2-6, such as SIPOMER PAM-100, SIPOMER PAM-200, and SIPOMER PAM-300 all available from Solvay; phosphoalkoxy (meth)acrylates such as phospho ethylene glycol (meth)acrylate, phospho di-ethylene glycol (meth)acrylate, phospho tri-ethylene glycol (meth)acrylate, phospho propylene glycol (meth)acrylate, phospho di-propylene glycol (meth)acrylate, phospho tri-propylene glycol (meth)acrylate, salts thereof, and mixtures thereof. The acrylic polymer may comprise, based on the weight of the polymer, from 0.1% to 20% by weight, from 0.3% to 10% by weight, from 0.5% to 5% by weight, or from 1% to 3% by weight, of structural units of structural units of one or more ethylenically unsaturated monomers carrying at least one functional group.

The acrylic polymer in the present disclosure may comprise structural units of one or more additional monomers. The additional monomers include, but not limited to, itaconic acid, or fumaric acid; or a monomer bearing an acid-forming group which yields or is subsequently convertible to, such an acid group (such as anhydride, (meth)acrylic anhydride, or maleic anhydride); p-styrenesulfonic acid sodium salt (SSS); acrylamide; or mixtures thereof.

The acrylic polymer in the present disclosure may have a weight average molecular weight of from 10,000 to 1,000,000, from 20,000 to 200,000, or from 40,000 to 150,000. The weight average molecular weight may be measured by gel permeation chromatography (GPC) calibrated by the polystyrene standard.

The acrylic polymer in the present disclosure has a glass transition temperature of -40°C to 15°C, preferably, -40°C to 10°C, more preferably -40°C to 7°C.

In one embodiment, the aqueous emulsion of acrylic polymer is PRIMAL^{™} EC2848ER, ELASTENE^{™} 2468M, PRIAML^{™} AC261p, MAINCOTE^{™} PR-71K, PRIMAL^{™} SF-155, ROBOND^{™} PS-90, PRIMAL^{™} EC-2540, ELASTENE^{™} 2468, PRIMAL^{™} EC-2949, PRIMAL^{™} EC-4811, PRIMAL^{™} EC-4642 ME, PRIMAL^{™} EC-1791, ROBOND^{™} L-168, TIANBA^{™} 2012, ELASTENE^{™} 2475, available from The Dow Chemical Company.

In the adhesive composition of the present disclosure, component (a) comprises 5-70%, preferably, 10-60%, more preferably, 20-50% by weight of the composition, based on the solids of the composition.

Examples of suitable epoxy compounds include, but are not limited to aliphatic epoxy resins, cyclo-aliphatic epoxy resins, and aromatic epoxy resins. More specific examples include, but are not limited to, 1,2-propanediol diglycidyl ether, 1,4-butanediol diglycidyl ether, 1,6-hexanediol diglycidyl ether, poly(propylene glycol) diglycidyl ether, 1,4-cyclohexanedimethanol diglycidyl ether, 1,3-cyclohexanedimethanol diglycidyl ether, 3',4'-epoxycyclohexylmethyl-3,4-epoxycyclohexanecarboxylate, 3,4-epoxycyclohexyloxirane, 2-(3 ',4'-epoxycyclohexyl)-5,1"-spiro-3",4"-epoxycyclohexane-1,3-dioxane, vinyl cyclohexene monoxide, bis(3,4-epoxycyclohexylmethyl) adipate, the diglycidyl ester of phthalic acid, the diglycidyl ester of hexahydrophthalic acid, diglycidyl ether of bisphenol A (DGEBA), solid epoxy resins based on DGEBA, phenoxy resins, the diglycidyl ether of bisphenol F, an epoxy novolac resin, cresol epoxy novolacs, and mixtures thereof. Preferably, a method to prepare an epoxy compound dispersion is to mix an epoxy compound with water to form an epoxy dispersion, wherein the epoxy compound dispersion comprises epoxy particles having a size in the range of from 50 nanometers to 10 microns. In various embodiments, the mixing occurs at a temperature in the range of from 10°C to 90°C, preferably from 20°C to 60°C, and a highspeed mixer or a homogenizer is used. In various embodiments, surfactants may be used in the preparation of the epoxy compound dispersion. Suitable surfactants include, but are not limited to, nonionic surfactants, such as APEO free; nonionic wetting agents such as polyalkylene oxide block copolymers, polyoxyethylene glycol alkyl ethers, glucoside alkyl ethers, fatty acid esters, glycerol alkyl esters, sorbitan alkyl esters, and polyoxyethylene glycol alkylphenol ethers. The preferred nonionic wetting agents include commercially available wetting agents such as TRITON^{™} X-405 Octylphenol Ethoxylate available from The Dow Chemical Company. If a surfactant is used, it is generally used at a concentration in the range of from 0.5 weight percent to 5 weight percent. Preferred epoxy compound dispersion is XCM-38 available from The Dow Chemical Company.

Examples of suitable acrylic-epoxy hybrid include, but not limited to, those disclosed in WO2017112018A1. In one embodiment, the acrylic-epoxy hybrid is prepared by mixing the above-mentioned epoxy compound dispersion with an acrylate dispersion to form an acrylic/epoxy latex having acrylic particles fully imbibed with epoxy. This mixing typically occurs at a temperature in the range of from 20 °C to 80 °C, preferably from 40 °C to 60 °C . The acrylate dispersion can be prepared through free radical emulsion or suspension addition polymerization or by dispersion of a pre-formed polymer under shear into an aqueous medium. Monomers suitable for the preparation of the acrylate dispersion include, but are not limited to, acrylates and methacrylates, such as methyl acrylate, ethyl acrylate, butyl acrylate, glycidyl methacrylate, 2-ethylhexyl acrylate, methyl methacrylate, ethyl methacrylate, butyl methacrylate, and 2-ethylhexyl methacrylate, and combinations thereof. Preferred acrylic-epoxy hybrid is Ecoground^{™} AEH-2014 available from The Dow Chemical Company.

In the adhesive composition of the present disclosure, component (b) comprises 3-50%, preferably, 5-40%, more preferably, 10-20% by weight of the composition, based on the solids of the composition.

The adhesive composition according to the present disclosure may further comprise a rheology modifier. The rheology modifier may include, not limited to, a non-ionic urethane polymer, cellulose, polyethylene glycol, starch ether, polyvinyl alcohol, polyimide, gum, flour and mixtures thereof. The rheology modifier may be present, based on the total solid weight of the adhesive composition, in an amount of generally from 0.1 to 5.0% by weight, from 0.2% to 3% by weight, or from 0.5% to 2.0% by weight.

The adhesive composition according to the present disclosure may further comprise one or more defoamers. "Defoamers" herein refer to chemical additives that reduce and hinder the formation of foam. Defoamers may be silicone-based defoamers, mineral oil-based defoamers, ethylene oxide/propylene oxide-based defoamers, or mixtures thereof. Suitable commercially available defoamers include, for example, TEGO Airex 902 W and TEGO Foamex 1488 polyether siloxane copolymer emulsions both available from TEGO, BYK-024 silicone deformer available from BYK, NOPCO^{®} NXZ deformer available from NOPCO or mixtures thereof. The defoamer may be present, by weight of the total solid of the adhesive composition, in an amount of generally from 0.1 to 2%, from 0.2% to 1.5%, or from 0.5% to 1.0%.

The adhesive composition according to the present disclosure may further comprise one or more fillers. The fillers may include, but not limited to, calcium carbonate, silica, silicate, gypsum, pulp, wood powder, flour powder and mixtures thereof. The filler may be present, by weight of the total solid of the adhesive composition, in an amount of generally from 1 to 75%, from 10% to 70%, or from 20% to 60%, or from 30 to 60%.

The adhesive composition according to the present disclosure may further comprise at least one water soluble, water emulsifiable or water dispersible epoxy curing agent. Examples of suitable curing agents include, but are not limited to, polyamines, polyamides, amidoamines, carboxylic functional polyesters, carboxylic functional polyacrylates, anhydrides, mercaptans, polymercaptans, cyclic amidines, and combinations thereof. More specific examples include, but are not limited to diethylenetriamine, triethylenetetramine, tetraethylenepentamine, 2,2,4-trimethylhexamethylenediamine, 2,4,4-trimethylhexamethylenediamine, 1,6-hexanediamine, 1-ethyl-1,3-propanediamine, bis(3-aminopropyl) piperazine, N-aminoethylpiperazine, N,N-bis(3-aminopropyl)ethylenediamine, 2,4-toluenediamine, 2,6-toluenediamine, 1,2-diaminocyclohexane, 1,4-diamino-3,6-diethylcyclohexane, 1,2-diamino-4-ethylcyclohexane, 1,4-diamino-3,6-diethylcyclohexane, 1 -cyclohexyl-3 ,4-diaminocyclohexane, isophorone-diamine, norboranediamine, 4,4'-diaminodicyclohexylmethane, 4,4'-diaminodicyclohexylmethane, 4,4'-diaminodicyclohexyl-propane, 2,2-bis(4-aminocyclohexyl)propane, 3,3'-dimethyl-4,4'-diaminodicyclohexylmethane, 3-amino-1-cyclohexane-amino-propane, 1,3- and 1,4-bis(aminomethyl)cyclohexane, m-xylylenediamine, p-xylylenediamine, polyoxypropylenediamines, polyamidoamines, and aminoplast resins formed by the reaction of ureas and melamines with aldehydes. In the adhesive composition of the present disclosure, the amount of the curing agent depends on the epoxy dosage. The active hydrogen of the curing agent to epoxy stoichiometry ratio is from 0.25 to 2, preferably 0.5-1.5, more preferably, 0.8-1.2. Generally, the curing agent may be present, by weight of the total solid of the adhesive composition, in an amount of from 0.5 to 20%, from 1% to 15%, or from 1% to 10%, or from 1 to 8%.

In addition to the components described above, the adhesive composition of the present invention may further comprise any one or combination of the following additives: dispersant buffers, neutralizers, humectants, mildewcides, biocides, colorants, flowing agents, crosslinkers, anti-oxidants, plasticizers, leveling agents, thixotropic agents, adhesion promoters, and grind vehicles. In one embodiment, the additive is selected from the group consisting of silane and isocyanate prepolymer. When present, these additives may be present in a combined amount of from 0 to 5% by weight or from 0.1% to 3% by weight, or from 0.5 to 1.5% by weight, based on the total solid weight of the adhesive composition.

In a second aspect, the present disclosure provides a method for producing plywood, comprising:
(a) providing a formaldehyde free adhesive composition according to this disclosure;
(b) providing two or more layers of wood;
(c) applying the formaldehyde free adhesive composition onto one or two surfaces of said two or more layers of wood;
(d) stacking two or more layers of wood and pressing the stacked two or more layers of wood at room temperature; and
(e) pressing the stacked two or more layers of wood at an elevated temperature of 50-200 °C.

The plywood obtained by the above method generally comprises, not limited to, 3-11 layers of wood, preferably, 5-9 layers of wood, more preferably 5-7 layers of wood.

In the above step (d), the pressing is carried out at a preferred pressure of 0.5-20MPa, more preferably 1-10MPa, most preferably 1-5MPa.

In the above step (d), the pressing is carried out for 1-120 minutes, preferably 10-80 minutes, and more preferably 20-40 minutes.

In the above step (e), the pressing is carried out at a preferred pressure of 0.5-20MPa, more preferably 1-10MPa, most preferably 1-5MPa.

In the above step (e), the pressing is carried out at a preferred temperature of 60-180°C, more preferably 80-150°C, most preferably 100-120°C.

In the above step (e), the pressing is carried out for 1-80 minutes, preferably 5-40 minutes, and more preferably 10-20 minutes.

In a third aspect, the present disclosure provides a plywood obtained by a formaldehyde free adhesive composition according to the present disclosure.

### EXAMPLES

Some embodiments of the invention will now be described in the following Examples, wherein all parts and percentages are by weight unless otherwise specified.

**Table 1. Raw materials**

| Function | Ingredients | Supplier |
|---|---|---|
| Acrylic emulsion | PRIMAL^{™} EC2848ER | The Dow Chemical Company |
| | ELASTENE^{™} 2468M | |
| | PRIMAL^{™} AC261p | |
| | MAINCOTE^{™} PR-71K | |
| | PRIMAL^{™} SF-155 | |
| | ROBOND^{™} PS-90 | |
| | PRIMAL^{™} EC-2540 | |
| | ELASTENE^{™} 2468 | |
| | PRIMAL^{™} EC-2949 | |
| | PRIMAL^{™} EC-4811 | |
| | PRIMAL^{™} EC-4642 ME | |
| | PRIMAL^{™} EC-1791 | |
| | ROBOND^{™} L-168 | |
| | TIANBA^{™} 2012 | |
| | ELASTENE^{™} 2475 | |
| Epoxy dispersion | XCM-38 | |
| Acrylic-epoxy dispersion | Ecoground^{™} AEH-2014 | |
| Filler | Calcium carbonate | Changxing Qingsheng Calcium Industry Co., LTD |
| | Industry flour | Wujiang Junfa Chemical Co., LTD |
| Rheology modifier | Acrysol^{™} RM-8W | The Dow Chemical Company |
| Defoamer | NOPCO^{®} NXZ | NOPCO |
| Additive | 3-Aminopropyltriethoxysilane (KH550) | SCRC |
| | γ -(2,3-epoxypropoxy)propyltrimethoxysilane (KH560) | |
| Hardener | Aradur^{®} 36 BD | Huntsman |
| | Pentaethylenehexamine | TCI |

### Glass transition temperature measurements

10 grams of emulsion were placed in a plastic dish and allowed to dry for 24 hours at room temperature. The resultant film was then subjected to 50°C for 48 hours to further dry the film. A small piece of the film was cut off and placed in a TA Instruments standard aluminum hermetic pan which was sealed. The sample was subjected to two cycles of -60°C to 100°C at a heating ramp rate of 10°C/min. The glass transition temperature for the polymer is measured at the midpoint of the inflection using the half-height method.

### Boiling water test

One of the most important requirements of plywood is water resistance. According to the Chinese code GB/T18259-2009, for plywood of class I, it needs to pass boiling water test. A detailed test method is described below according to the Chinese code GB/T17657-2013:
1) Six test samples (75mm*75mm) were cut out from the plywood sample (300mm*300mm).
2) The test samples were immerged into boiling water for 4 hours.
3) Then the test samples were taken out from boiling water and placed in oven (63°C) to dry for 20 hours.
4) Then the dried test samples were immerged into boiling water for another 4 hours.
5) The test samples were taken out and placed in oven (63°C) to dry for 3 hours.
6) Then the interface between different layers was carefully observed. The stripping length of each layer of each sample should be less than 25 mm.

Due to the volume expansion of wood when it absorbed water, it would cause internal stress between different wood layers. So the boiling water test evaluates not only the water resistance performance of adhesive but also the adhesion performance under wet condition. In lab test, the boiling water test was used to evaluate the performance of the adhesive.

### Example 1: Control Example and Inventive Examples

Acrylic emulsion, epoxy or acrylic-epoxy hybrid dispersion and water were mixed together according to the formulation, and defoamer was also added. Filler was added, and dispersed by stirring. Rheology modifier was added to adjust the viscosity to around 20000 cp (Brookfield, 5#, 30rpm). A curing agent was added and dispersed by stirring. Additive (if any) might be added. The adhesive composition was ready to use. The above components and their amounts were listed in Table 2 below

In order to simulate the condition in factory, the adhesive composition waited 4 hours before to be applied on the wood layer surface. After 4 hours, the adhesive was applied on the wood layer (30cm * 30cm). The loading amounts was 200g/m². Here the wood was eucalyptus which was widely used in the market. The wood layers with adhesive were left for another 4 hours before they were stacked layer by layer for pressing under room temperature. The stacked wood layers (7 layers) were taken for pressing at room temperature for 40 mins. The pressure was around 2 MPa. Then the stacked wood layers were taken for pressing at 110 °C. The pressing time was 1 min/mm and the pressure was around 2MPa. The plywood was ready after hot pressing and it was left for another 24 hours at room temperature before it was tested in boiling water for 4 hours. The results of boiling water test of the plywood were listed in Table 2 below.

**Table 2. Basic formulation of adhesive and water resistance performance**

| | Acrylic emulsion /g | Epoxy or acrylic-epoxy hybrid dispersion /g | | Filler /g | Curing agent /g | | Additive /g | | Water /g | Boiling water test |
|---|---|---|---|---|---|---|---|---|---|---|
| | Elastene^{™} 2468M | XCM38 | Ecoground^{™} AEH-2014 | CaCO₃ (700 mesh) /g | Pentaeth ylenehex amine | Aradur^{®} 36BD | KH550 | KH560 | | |
| CE-1 | 120 (35.5%) | | | 110 (64.5%) | | | | | 20 | Failed |
| IE-1 | 80 (20.3 % ) | 40 (12.9%) | | 120 (60.4%) | | 16 (6.4%) | | | 35 | Passed |
| IE-2 | 80 (21.2%) | 40 (13.4%) | | 120 (62.8%) | 5 (2.6%) | | | | 35 | Passed |
| IE-3 | 80 (22.0% ) | | 40 (11.0%) | 120 (65.3%) | | 4 (1.7%) | | | 35 | Passed |
| IE-4 | 100 (29.8%) | 20 (7.5%) | | 100 (58.9%) | | 8 (3.8%) | | | 35 | Passed |
| IE-5 | 100 (29.7%) | 20 (7.5%) | | 100 (58.9%) | | 7 (3.3%) | 1 (0.6%) | | 35 | Passed |
| IE-6 | 100 (29.6%) | 20 (7.5%) | | 100 (58.6%) | | 8 (3.7%) | | 1 (0.6%) | 35 | Passed |

| | | | | | | | | | | |
|---|---|---|---|---|---|---|---|---|---|---|
| CE: Control example IE: Innovative example Note: solid content of 2468M is 50.5%, solid content of XCM38 is 64%, solid content of AEH-2014 is 50.5%, solid content of Aradur^{®} 36 BD is 80%. The numbers in the parentheses are the solid content of the materials in the formulation. | | | | | | | | | | |

If the adhesive composition comprised acrylic emulsion, the water resistance performance was not good enough to pass the boiling water test (CE-1). While the epoxy dispersion or acrylic-epoxy hybrid dispersion was added in the formulation, the adhesive compositions, IE-1 to IE-4, showed good adhesion and water resistance performance. Different amine curing agent could be adopted, like pentaethyleneheamine and Aradur^{®} 36BD (a water emulsifiable amine curing agent). Some additive could also been added, like silane, which could give better performance (IE-5 and IE-6).

### Example 2

The IE-4 sample was taken to the Wood Products Quality Test & Inspection Center of State Forestry Administration (Nanjing, China) to evaluate the formaldehyde value. The formaldehyde value was undetectable, which had proved the formaldehyde free concept.

### Example 3

In order to further study the factor of acrylic latex which would benefit the adhesive performance, a series of comparison works had been conducted. The formulation of IE-4 had been used to do the comparison works. First, Tg (glass transition temperature) of the acrylic latex was investigated. If the latex had high Tg, the formulation lost its tackiness under room temperature. It caused cold press problem that the wood layers could not be initially bonded together. If the latex had very low Tg, the formulation would be lack of cohesion performance which would cause final adhesion problem.

**Table 3. Acrylic latex Tg evaluation**

| Acrylic latex | Tg/°C | Cold press performance | Boiling water test |
|---|---|---|---|
| PRIMAL^{™} AC261p | 25 | Not good (could be peeled off) | Failed |
| MAINCOTE^{™} PR-71K | 20.6 | Not good (could be peeled off) | Failed |
| PRIMAL^{™} SF-155 | 7.2 | Good | Passed |
| ELASTENE^{™} 2468M | -19.6 | Good | Passed |
| PRIMAL^{™} 2848ER | -31.1 | Good | Passed |
| ROBOND^{™} PS-90 | -43 | Good | Failed |

### Example 4

In this example, the functional monomers in the acrylic latex were also carefully evaluated. The results were summarized in Table 4 below. The formulation of IE-4 had been used to do the comparison works. Based on the data below, the functional monomers showed a significant effect on final performance. With similar Tg, when the latexes had a functional monomer(s) they show good mechanical performance.

**Table 4. Functional monomer evaluation**

| Acrylic latex | Functional monomer | Tg/°C | Boiling water test |
|---|---|---|---|
| PRIMAL^{™} EC-2540 | No | -7.4 | Failed |
| ELASTENE^{™} 2468 | Yes | -17.8 | Passed |
| ELASTENE^{™} 2468M | Yes | -19.6 | |
| PRIMAL^{™} EC-2949 | Yes | -30.8 | |
| PRIMAL^{™} EC-4811 | Yes | -18.8 | |
| PRIMALT^{™} EC-4642 ME | Yes | -14.4 | |
| PRIMAL^{™} EC-1791 | Yes | -30.4 | |
| ROBOND^{™} L-168 | No | 4.7 | Failed |
| PRIMAL^{™} SF-155 | Yes | 7.2 | Passed |
| TIANBA^{™} 2012 | No | -10.5 | Failed |
| ELASTENE^{™} 2475 | Yes | -12.1 | Passed |

## Claims

1. A formaldehyde free adhesive composition comprising:
(a) an aqueous emulsion of acrylic polymer;
(b) one or more epoxy compound dispersions or acrylic-epoxy hybrid dispersions;
(c) at least one water soluble, water emulsifiable or water dispersible epoxy curing agent selected from the group consisting of polyamines, polyamides, amidoamines, carboxylic functional polyesters, carboxylic functional polyacrylates, anhydrides, mercaptans, polymercaptans, cyclic amidines, and combinations thereof; and
(d) an aqueous continuous phase;
wherein said acrylic polymer has at least one structural unit of one or more ethylenically unsaturated monomers carrying at least one adhesion prompting function group, and said acrylic polymer has a glass transition temperature of -40°C to 15°C as determined by differential scanning calorimetry, and wherein the adhesion prompting function group is selected from the group consisting of ureido, alkoxysilane and phosphorous groups.

2. The adhesive composition according to claim 1, wherein the acrylic polymer has a glass transition temperature of -40°C to 10°C, as determined by differential scanning calorimetry.

3. The adhesive composition according to claim 1, wherein the one or more epoxy compound dispersions are independently selected from the group consisting of cyclo-aliphatic epoxy resin dispersions, and aromatic epoxy resin dispersions.

4. The adhesive composition according to claim 1, wherein the acrylic-epoxy hybrid dispersions are prepared by mixing epoxy compound dispersion with an acrylate dispersion to form an acrylic/epoxy latex having acrylic particles fully imbibed with epoxy.

5. The adhesive composition according to claim 1, wherein the adhesive composition further comprises one or more of a filler, a defoamer, a rheology modifier and an additive.

6. The adhesive composition according to claim 1, wherein the adhesive composition comprises the following components:
1) 10-70% of an aqueous emulsion of acrylic polymer,
2) 3-70% of one or more epoxy compound dispersions or acrylic-epoxy hybrid dispersions,
3) 0-75% of a filler,
4) 0.1-2% of defoamer,
5) 0.1-2% of rheology modifier,
6) 0.5-20% of at least one water soluble, water emulsifiable or water dispersible epoxy curing agent,
7) 0-5% of an additive,
8) water,
the above percentages are calculated based on the total solid weight of the adhesive composition.

7. A method for producing plywood, comprising the following steps:
(a) providing a formaldehyde free adhesive composition according to any one of claims 1-5;
(b) providing two or more layers of wood;
(c) applying the formaldehyde free adhesive composition onto one or two surfaces of said two or more layers of wood;
(d) stacking two or more layers of wood and pressing the stacked two or more layers of wood at room temperature; and
(e) pressing the stacked two or more layers of wood at an elevated temperature of 50-200°C.

8. A plywood obtained by a formaldehyde free adhesive composition according to any one of claims 1-6.

## Patentansprüche

1. Formaldehydfreie Haftmittelzusammensetzung, umfassend:
(a) eine wässrige Emulsion von Acrylpolymer;
(b) eine oder mehrere Epoxidverbindungsdispersionen oder Acrylepoxidhybriddispersionen;
(c) mindestens ein wasserlösliches, wasseremulgierbares oder wasserdispergierbares Epoxidhärtungsmittel, das aus der Gruppe ausgewählt ist, bestehend aus Polyaminen, Polyamiden, Amidoaminen, funktionellen Carboxylpolyestern, funktionellen Carboxylpolyacrylaten, Anhydriden, Mercaptanen, Polymercaptanen, cyclischen Amidinen und Kombinationen davon; und
(d) eine wässrige kontinuierliche Phase;
wobei das Acrylpolymer mindestens eine Struktureinheit von einem oder mehreren ethylenisch ungesättigten Monomeren aufweist, die mindestens eine haftvermittelnde Funktionsgruppe tragen, und das Acrylpolymer eine Glasübergangstemperatur von -40 °C bis 15 °C aufweist, wie durch dynamische Differenzkalorimetrie bestimmt, und wobei die haftvermittelnde Funktionsgruppe aus der Gruppe ausgewählt ist, bestehend aus Ureido-, Alkoxysilan- und Phosphorgruppen.

2. Haftmittelzusammensetzung nach Anspruch 1, wobei das Acrylpolymer eine Glasübergangstemperatur von -40 °C bis 10 °C aufweist, wie durch dynamische Differenzkalorimetrie bestimmt.

3. Haftmittelzusammensetzung nach Anspruch 1, wobei die eine oder die mehreren Epoxidverbindungen unabhängig aus der Gruppe ausgewählt sind, bestehend aus cycloaliphatischen Epoxidharzdispersionen und aromatischen Epoxidharzdispersionen.

4. Haftmittelzusammensetzung nach Anspruch 1, wobei die Acrylepoxidhybriddispersionen durch Mischen der Epoxidverbindungsdispersion mit einer Acrylatdispersion hergestellt werden, um einen Acryl-/Epoxidlatex auszubilden, der Acrylpartikel aufweist, die vollständig mit Epoxid durchtränkt sind.

5. Haftmittelzusammensetzung nach Anspruch 1, wobei die Haftmittelzusammensetzung ferner eines oder mehrere von einem Füllstoff, einem Entschäumer, einem Rheologiemodifikator und einem Zusatzstoff umfasst.

6. Haftmittelzusammensetzung nach Anspruch 1, wobei die Haftmittelzusammensetzung die folgenden Komponenten umfasst:
1) 10-70 % einer wässrigen Emulsion von Acrylpolymer,
2) 3-70 % einer oder mehrerer Epoxyverbindungsdispersionen oder Acrylepoxidhybriddispersionen,
3) 0-75 % eines Füllstoffs,
4) 0,1-2 % Entschäumer,
5) 0,1-2 % Rheologiemodifikator,
6) 0,5-20 % mindestens eines wasserlöslichen, wasseremulgierbaren oder wasserdispergierbaren Epoxidhärtungsmittels,
7) 0-5 % eines Zusatzstoffs,
8) Wasser,
wobei die vorstehenden Prozentsätze basierend auf dem Gesamtfeststoffgewicht der Haftmittelzusammensetzung berechnet werden.

7. Verfahren zum Herstellen von Sperrholz, umfassend die folgenden Schritte:
(a) Bereitstellen einer formaldehydfreien Haftmittelzusammensetzung nach einem der Ansprüche 1 bis 5;
(b) Bereitstellen von zwei oder mehr Holzschichten;
(c) Aufbringen der formaldehydfreien Haftmittelzusammensetzung auf eine oder zwei Oberflächen der zwei oder mehr Holzschichten;
(d) Stapeln von zwei oder mehr Holzschichten und Pressen der gestapelten zwei oder mehr Holzschichten bei Raumtemperatur; und
(e) Pressen der gestapelten zwei oder mehr Holzschichten bei einer erhöhten Temperatur von 50-200 °C.

8. Sperrholz, das durch eine formaldehydfreie Haftmittelzusammensetzung nach einem der Ansprüche 1 bis 6 erhalten wird.

## Revendications

1. Composition adhésive exempte de formaldéhyde comprenant :
(a) une émulsion aqueuse de polymère acrylique ;
(b) une ou plusieurs dispersions de composé époxy ou dispersions hybrides d'acrylique-époxy ;
(c) au moins un agent de durcissement d'époxy hydrosoluble, pouvant former une émulsion dans l'eau, ou hydrodispersible choisi dans le groupe constitué par polyamines, polyamides, amidoamines, polyesters à fonctionnalité carboxylique, polyacrylates à fonctionnalité carboxylique, anhydrides, mercaptans, polymercaptans, amidines cycliques, et combinaisons de ceux-ci ; et
(d) une phase continue aqueuse ;
dans laquelle ledit polymère acrylique a au moins un motif structural d'un ou plusieurs monomères à insaturation éthylénique portant au moins un groupe de fonction d'incitation à l'adhésion, et ledit polymère acrylique a une température de transition vitreuse de -40 °C à 15 °C telle que déterminée par calorimétrie différentielle à balayage, et dans laquelle le groupe de fonction d'incitation à l'adhésion est choisi dans le groupe constitué par des groupes uréido, alcoxysilane et phosphoreux.

2. Composition adhésive selon la revendication 1, dans laquelle le polymère acrylique a une température de transition vitreuse de -40 °C à 10 °C, telle que déterminée par calorimétrie différentielle à balayage.

3. Composition adhésive selon la revendication 1, dans laquelle la ou les dispersions de composé époxy sont indépendamment choisies dans le groupe constitué par dispersions de résine époxy cycloaliphatique, et dispersions de résine époxy aromatique.

4. Composition adhésive selon la revendication 1, dans laquelle les dispersions hybrides d'acrylique-époxy sont préparées en mélangeant une dispersion de composé époxy avec une dispersion d'acrylate pour former un latex acrylique/époxy ayant des particules d'acrylique complètement imbibées d'époxy.

5. Composition adhésive selon la revendication 1, la composition adhésive comprenant en outre un ou plusieurs parmi une charge, un démousseur, un agent modifiant la rhéologie et un additif.

6. Composition adhésive selon la revendication 1, la composition adhésive comprenant les composants suivants :
1) 10 à 70 % d'une émulsion aqueuse de polymère acrylique,
2) 3 à 70 % d'une ou plusieurs dispersions de composé époxy ou dispersions hybrides d'acrylique-époxy,
3) 0 à 75 % d'une charge,
4) 0,1 à 2 % de démousseur,
5) 0,1 à 2 % d'agent modifiant la rhéologie,
6) 0,5 à 20 % d'au moins un agent de durcissement d'époxy hydrosoluble, pouvant former une émulsion dans l'eau, ou hydrodispersible,
7) 0 à 5 % d'un additif,
8) de l'eau,
les pourcentages ci-dessus sont calculés en fonction du poids total de solides de la composition adhésive.

7. Procédé de production de contreplaqué, comprenant les étapes suivantes :
(a) la fourniture d'une composition adhésive exempte de formaldéhyde selon l'une quelconque des revendications 1 à 5 ;
(b) la fourniture de deux couches de bois ou plus ;
(c) l'application de la composition adhésive exempte de formaldéhyde sur une ou deux surfaces desdites deux couches de bois ou plus ;
(d) l'empilement de deux couches de bois ou plus et le pressage des deux couches de bois ou plus empilées à la température ambiante ; et
(e) le pressage des deux couches de bois ou plus empilées à une température élevée de 50 à 200 °C.

8. Contreplaqué obtenu par une composition adhésive exempte de formaldéhyde selon l'une quelconque des revendications 1 à 6.
